# FASCICULE DE BREVET EUROPEEN

(11) **EP 3 366 902 B1**
(45) Date de publication et mention de la délivrance du brevet: **17.11.2021**
(21) Numéro de dépôt: 18305139.0
(22) Date de dépôt: 09.02.2018
(51) Int. Cl.: F02B 37/16, F02M 26/06

(54) **DISPOSITIF DE CONTRÔLE DE L'INTRODUCTION DE LA QUANTITÉ DE FLUIDE À L'ADMISSION D'UN MOTEUR À COMBUSTION INTERNE SURALIMENTÉ ÉQUIPÉ D'UN CIRCUIT DE RECIRCULATION DE GAZ D'ÉCHAPPEMENT ET MÉTHODE UTILISANT UN TEL DISPOSITIF**
VORRICHTUNG ZUR KONTROLLE DER FLÜSSIGKEITSMENGENEINSPEISUNG AM EINLASS EINES AUFGELADENEN VERBRENNUNGSMOTORS, DER MIT EINEM ABGASRÜCKFÜHRUNGSKREISLAUF AUSGESTATTET IST, UND METHODE, BEI DER EINE SOLCHE VORRICHTUNG VERWENDET WIRD
DEVICE FOR CONTROLLING THE INJECTION OF THE AMOUNT OF FLUID TO THE INLET OF A SUPERCHARGED INTERNAL COMBUSTION ENGINE PROVIDED WITH AN EXHAUST GAS RECIRCULATION SYSTEM AND METHOD USING SUCH A DEVICE

(30) Priorité: 23.02.2017 FR 1751406
(43) Date de publication de la demande: 29.08.2018
(73) Titulaire: IFP Energies nouvelles, 92852 Rueil-Malmaison Cedex (FR)
(72) Inventeur: WALTER, Bruno, 42800 Chagnon (FR)
(74) Mandataire: IFP Energies nouvelles

(56) Documents cités:
- DE-A1-102015 006 288
- DE-A1-102015 015 794
- DE-A1-102015 109 223
- GB-A- 2 504 713
- US-A1- 2013 305 716
- US-A1- 2016 326 972

## Description

La présente invention se rapporte à un dispositif de contrôle de l'introduction de la quantité de fluide à l'admission d'un moteur à combustion interne suralimenté équipé d'un circuit de recirculation de gaz d'échappement et à une méthode utilisant un tel dispositif.

En particulier, la présente invention est adaptée à des moteurs à combustion interne, notamment des moteurs Diesel, tels que ceux utilisés pour des véhicules automobiles ou industriels ou des équipements stationnaires.

Comme cela est largement connu, la puissance délivrée par un moteur à combustion interne est dépendante de la quantité d'air introduite dans la chambre de combustion de ce moteur, quantité d'air qui est elle-même proportionnelle à la densité de cet air.

Ainsi, il est habituel d'augmenter cette quantité d'air au moyen d'une compression de l'air extérieur avant qu'il ne soit admis dans cette chambre de combustion. Cette opération, appelée suralimentation, peut être réalisée par tous moyens, tel qu'un turbocompresseur ou un compresseur entraîné, qui peut être centrifuge ou volumétrique.

Dans le cas d'une suralimentation par un turbocompresseur, ce dernier comprend une turbine rotative, à simple flux ou à double flux, reliée par un axe à un compresseur rotatif. Les gaz d'échappement issus du moteur traversent la turbine qui est alors entrainée en rotation. Cette rotation est ensuite transmise au compresseur qui, de par sa rotation, comprime l'air extérieur avant qu'il ne soit introduit dans la chambre de combustion.

Comme cela est mieux décrit dans la demande de brevet français N° 2 478 736, il est prévu, pour pouvoir amplifier de manière significative cette quantité d'air comprimé dans la chambre de combustion du moteur, d'augmenter encore plus la compression de l'air extérieur par le compresseur.

Cela se réalise plus particulièrement en augmentant la vitesse de rotation de la turbine et donc du compresseur.

Pour cela, il est utilisé un circuit amplificateur de fluide, dit circuit Boost, grâce auquel une partie de l'air comprimé sortant du compresseur est déviée pour être admis directement à l'entrée de la turbine en se mélangeant avec les gaz d'échappement. Cette turbine est alors traversée par une plus grande quantité de fluide (mélange d'air comprimé et de gaz d'échappement), ce qui permet d'augmenter la vitesse de rotation de la turbine et par conséquence du compresseur. Cette augmentation de vitesse du compresseur permet ainsi d'augmenter la pression de l'air extérieur qui sera comprimé dans ce compresseur puis introduit dans la chambre de combustion du moteur.

Par cela, l'air comprimé a une densité plus élevée ce qui permet d'accroitre la quantité d'air contenue dans la chambre de combustion.

Ce type de moteur suralimenté, bien que donnant satisfaction, présente néanmoins des inconvénients non négligeables. Un autre exemple d'un moteur suralimenté par un turbocompresseur est décrit dans le document DE 10 2015 015 794 A.

Ainsi, une des principales difficultés avec un circuit amplificateur de fluide (Boost) réside dans sa compatibilité avec la recirculation des gaz d'échappement (EGR) à l'admission du moteur.

En effet, la plupart des moteurs Diesel sont équipés d'un circuit de recirculation de gaz d'échappement, dit circuit EGR pour "Exhaust Gas Recirculation", pour limiter à la source les émissions de NOx.

La recirculation de gaz d'échappement se fait généralement au moyen d'un circuit EGR prélevant le gaz d'échappement en sortie du moteur pour le renvoyer en aval du compresseur de l'air d'admission.

La circulation des gaz d'échappement recirculés étant exactement l'inverse de celle de l'air dérivé du circuit amplificateur de fluide, on risque un conflit entre les deux circuits avec une annulation des effets. Il est donc nécessaire de définir une architecture de boucle d'air spécifique permettant de rendre le circuit Boost et le circuit EGR compatibles.

La présente invention concerne une architecture optimisée de la boucle d'air et de recirculation de gaz d'échappement du moteur permettant d'utiliser, sur un même moteur, le circuit Boost et le circuit EGR, tout en évitant un risque de conflit entre les deux circuits et une complexité trop élevée pour les conduits et les commandes respectifs.

Ainsi, la présente invention concerne un dispositif de contrôle de la quantité d'air introduit à l'admission d'un moteur à combustion interne suralimenté comprenant les caractéristiques de la présente revendication 1.

La canalisation peut prendre naissance en un point d'intersection avec la conduite de gaz d'échappement détendus et peut aboutir à un point d'intersection avec la conduite d'alimentation.

Le dispositif peut comprendre un échangeur de chaleur pour le refroidissement des gaz d'échappement issus de la turbine.

Le dispositif peut comprendre des moyens de post-traitement des gaz d'échappement sortant de la turbine.

L'invention concerne également une méthode de contrôle de la quantité d'air introduit à l'admission d'un moteur à combustion interne suralimenté comprenant les caractéristiques de la présente revendication 5.

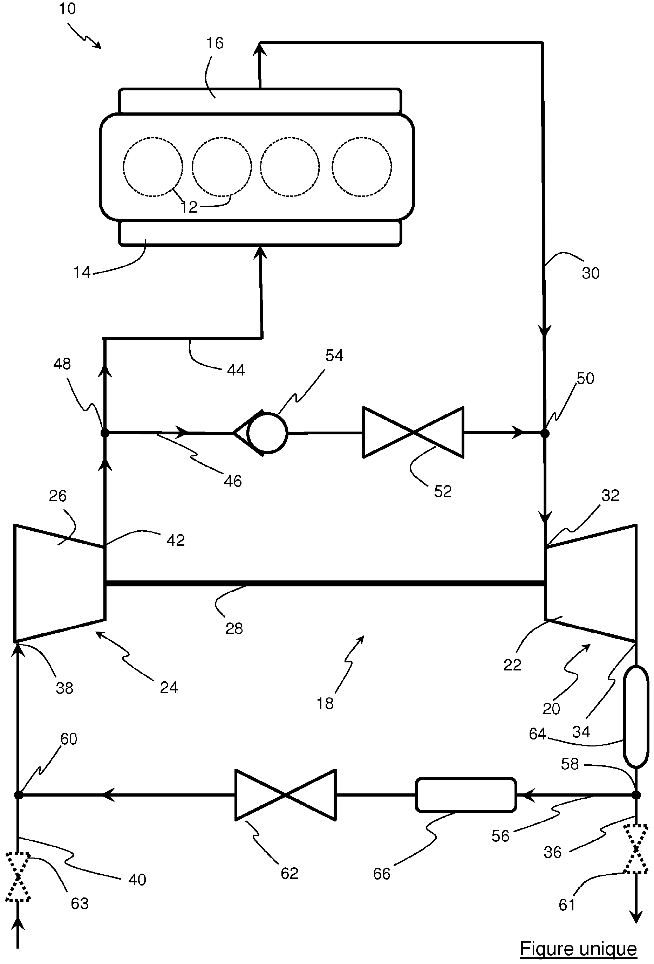

Les autres caractéristiques et avantages de l'invention vont apparaître à la lecture de la description qui va suivre, donnée à titre uniquement illustratif et non limitatif, et à laquelle est annexée la figure unique illustrant un moteur à combustion interne avec un circuit Boost et un circuit EGR.

Sur la figure unique, le moteur à combustion interne 10 est un moteur à combustion interne à injection directe, notamment de type Diesel, mais cela n'écarte en aucune manière tout autre type de moteur à combustion interne.

De manière préférentielle, ce moteur comprend au moins deux cylindres 12, ici quatre cylindres, avec, pour chaque cylindre, des moyens d'admission (non représentés) avec au moins une soupape d'admission contrôlant une tubulure d'admission et aboutissant à un collecteur d'admission 14 ainsi que des moyens d'échappement (non représentés) des gaz d'échappement avec au moins une soupape d'échappement contrôlant une tubulure d'échappement et arrivant à un collecteur d'échappement 16.

Les collecteurs d'admission 14 et d'échappement 16 sont reliés à un turbocompresseur 18 utilisé pour la compression de l'air introduit dans le collecteur d'admission 14.

Comme illustré sur la figure unique, le turbocompresseur est un turbocompresseur à simple entrée mais l'invention ne se limite pas à un tel turbocompresseur, elle est aussi applicable aux turbocompresseurs à double entrées dit « Twin scroll », voire même à des turbocompresseurs à n entrées avec n supérieur ou égal à 2.

Ce type de turbocompresseur à simple entrée comprend un étage de détente 20 avec au moins une turbine de détente 22 et un étage de compression 24 avec au moins un compresseur 26 qui est relié en rotation par un arbre 28 à la turbine.

La turbine est balayée par les gaz d'échappement provenant du collecteur d'échappement au travers d'une conduite de gaz d'échappement 30 reliant ce collecteur à l'entrée 32 de la turbine.

La sortie de gaz d'échappement 34 de la turbine est raccordée conventionnellement à la ligne d'échappement du moteur par une conduite de gaz d'échappement détendus 36.

Le compresseur 26 du turbocompresseur comporte une admission de fluide 38 alimentée par une conduite d'alimentation 40 véhiculant de l'air extérieur ou un mélange d'air et de gaz d'échappement comme il sera explicité plus loin. La sortie de fluide comprimé 42 de ce compresseur est reliée au collecteur d'admission 14 par une conduite de fluide comprimé 44.

Avantageusement, il peut être prévu de placer un échangeur de refroidissement (non représenté) sur la conduite 44, entre le compresseur 26 et le collecteur d'admission 14.

Comme mieux visible sur la figure, un conduit de transfert 46 permet de faire circuler une partie de l'air comprimé (ou d'un mélange d'air et de gaz d'échappement) sortant du compresseur 26 vers l'entrée 32 de la turbine.

Plus précisément, ce conduit de transfert partiel prend naissance sur la conduite 44, à un point de d'intersection 48, et se raccorde ensuite, à partir d'un autre point d'intersection 50, sur la conduite de gaz d'échappement 30 qui aboutit à l'entrée de la turbine.

Cette conduite 46 porte des moyens de vannage 52, comme une vanne proportionnelle, commandés par tout moyen à la portée de l'homme du métier. Cette vanne permet ainsi de contrôler la circulation de l'air comprimé qui circule dans ce conduit de transfert entre les points 48 et 50.

Ce conduit porte également un clapet anti-retour 54 qui interdit la circulation des gaz d'échappement de la conduite de gaz d'échappement 30 vers la conduite de fluide comprimé 44.

Ainsi le circuit amplificateur de fluide, dit circuit Boost, comprend une portion de la conduite 44 (entre la sortie 42 du compresseur et le point d'intersection 48 sur la conduite 44), le conduit de transfert 46 avec sa vanne 52 et son clapet anti retour 54 et une portion de la conduite 30 entre le point d'intersection 50 et l'entrée 32 de la turbine.

Avantageusement, la vanne 52 pourra être placée en amont ou en aval du clapet anti retour 54 en fonction de la tenue de celui-ci aux fortes températures côté échappement.

Ce moteur comprend également une canalisation de gaz d'échappement recirculés 56 qui prend naissance en un point 58 de la conduite de gaz d'échappement détendus 36 de la turbine 22 et qui aboutit à un point d'intersection 60 avec la conduite d'alimentation 40 du compresseur 26. Ce conduit porte des moyens de vannage 62, comme une vanne proportionnelle, qui permettent de contrôler la circulation des gaz d'échappement dans la canalisation.

Ces moyens de vannage sont complétés par des moyens de vannages additionnels 61, 63, tels qu'une vanne proportionnelle, situés en aval du point 58 (vanne 61) et en amont du point 60 (vanne 63) qui permettent de forcer les gaz d'échappement à passer dans la canalisation 56.

Ainsi, pour la vanne additionnelle 61, le degré d'ouverture/fermeture de cette vanne permet de contrôler le débit de gaz après le point d'intersection 58 et par conséquent le débit de gaz qui est dévié vers la canalisation 56.

Le degré d'ouverture/fermeture de la vanne 63 permet de faire varier la dépression dans la conduite 40 entre l'admission du compresseur et le point 60, ce qui a pour conséquence de contrôler le débit de gaz d'échappement à partir du point 60.

Préférentiellement, un moyen de post-traitement des gaz d'échappement 64 est placé sur la conduite de gaz d'échappement détendus 36 entre la sortie 34 des gaz d'échappement de la turbine 22 et le point d'intersection 58 avec la canalisation 56.

Ce moyen de post traitement, tel qu'un catalyseur d'épuration des gaz d'échappement (éventuellement associé à un filtre à particules), permet d'éliminer une très grande partie de polluants à la sortie de façon à obtenir des gaz d'échappement quasiment dépourvus de polluants pouvant encrasser le compresseur.

Avantageusement, la canalisation 56 peut porter un échangeur de chaleur 66 pour assurer le refroidissement des gaz d'échappement recirculés avant leur mélange avec l'air au point 60.

Ceci forme donc un circuit de recirculation de gaz d'échappement, dit circuit EGR Basse Pression, avec une portion de la conduite 36 entre la sortie 34 de la turbine et le point d'intersection 58, la canalisation 56 avec sa vanne 62 (et éventuellement l'échangeur de chaleur) et une portion de la conduite 40 entre le point d'intersection 60 et l'admission 30 du compresseur 26.

Durant le fonctionnement, en cas de besoin d'air en grande quantité dans les cylindres, la vanne 52 du circuit Boost est commandée en ouverture pour introduire de l'air comprimé provenant du compresseur 26 dans la turbine 22 par le conduit de transfert 46, conjointement la vanne 62 du circuit EGR est commandée en fermeture.

L'air comprimé sortant du compresseur 26 circule dans le conduit 46 puis dans la conduite 36 pour aboutir à l'entrée 32 de la turbine 22 en y apportant un surplus de fluide à cette turbine.

Ainsi, la turbine est parcourue non seulement par les gaz d'échappement venant du collecteur d'échappement 16, mais également par de l'air comprimé qui vient s'ajouter à ces gaz. De ce fait, la rotation de la turbine est augmentée, ce qui entraine une augmentation de rotation du compresseur et, en conséquence, une augmentation de la pression de l'air comprimée qui sort de ce compresseur.

Dans cette configuration, le moteur fonctionne sans EGR puisque la vanne 62 est fermée.

Pour fonctionner avec recirculation des gaz d'échappement dans le but de limiter les températures de combustion et donc les émissions de NOx, la vanne 52 du circuit Boost est fermée et la vanne 62 du circuit EGR est ouverte.

Suivant le taux de gaz d'échappement recirculés désiré à l'admission du moteur, les moyens vannages additionnels situés en aval du point 58 et / ou en amont du point 60 peuvent être commandés pour forcer les gaz d'échappement à passer dans la canalisation 56.

Une portion des gaz d'échappement sortant de la turbine 22 est ainsi introduite dans la canalisation 56 pour se mélanger avec l'air de la conduite 40 pour être admis à l'admission 38 du compresseur 26.

Un mélange d'air et de gaz d'échappement comprimé est ainsi envoyé au collecteur d'admission 14 pour alimenter les cylindres 12.

Pour le fonctionnement simultané optimisé du circuit EGR et du circuit Boost les vannes 52 et 62 sont ouvertes.

Comme précédemment décrit, suivant le taux de gaz d'échappement recirculés désiré, les moyens vannages additionnels peuvent être commandés.

Ainsi, les gaz comprimés (air + gaz d'échappement) sortant du compresseur 26 circulent dans le conduit de transfert 46 pour aboutir à l'entrée 32 de la turbine 22 en y apportant un surplus de fluide à cette turbine. Simultanément, une portion des gaz d'échappement détendus issu de la turbine 22 est introduite dans la canalisation 56 pour se mélanger avec l'air circulant dans la conduite d'admission 40 pour ensuite être introduit dans le compresseur.

Il est ainsi possible de fortement augmenter la quantité de gaz d'échappement introduite dans les cylindres du moteur sans pour autant augmenter la richesse grâce à une augmentation concomitante du débit d'air extérieur et de gaz d'échappement.

De plus, les performances en terme de réduction des émissions à la source du moteur peuvent être accrues par l'utilisation conjointe du circuit Boost et du circuit EGR.

On peut également noter que le contrôle du débit de gaz d'échappement court-circuité par le circuit Boost ajoute également un degré de liberté sur le contrôle des taux d'EGR.

Ainsi, la conjugaison des réglages Boost et EGR permet d'ajuster une masse d'EGR associée à une richesse cylindre.

## Revendications

1. Dispositif de contrôle de la quantité d'air introduit à l'admission d'un moteur à combustion interne suralimenté comprenant au moins un turbocompresseur (18) avec un étage de compression (24) comportant au moins un compresseur (26) avec une admission (38) de fluide à comprimer reliée à une conduite d'alimentation (40), un étage de détente (20) avec au moins une turbine (22) à au moins une entrée (32) de gaz d'échappement et une sortie (34) de gaz d'échappement détendus reliée à une conduite de gaz d'échappement détendus (36), un conduit de transfert (46) de fluide comprimé de la sortie du compresseur vers l'au moins une entrée de la turbine avec des moyens de vannage (52) pour contrôler le transfert de fluide comprimé vers la turbine, **caractérisé en ce qu'**il comprend une canalisation de recirculation de gaz d'échappement (56) entre la sortie (34) de gaz d'échappement de la turbine (22) et l'admission (38) du compresseur (26), **en ce que** ledit conduit de transfert (46) de fluide comprimé comporte un clapet anti-retour (54) qui interdit la circulation des gaz d'échappement de la conduite des gaz d'échappement (30) vers la conduite de fluide comprimé (44), **en ce que** le dispositif comprend des moyens de vannage additionnels (61) placés en aval du point d'intersection (58) avec la conduite de gaz d'échappement détendus (36) pour forcer les gaz d'échappement à passer dans la canalisation (56), **en ce que** le dispositif comprend des moyens de vannage additionnels (63) placés en amont du point d'intersection (60) avec la conduite d'alimentation (40) pour forcer les gaz d'échappement à passer dans la canalisation (56), **en ce que** la canalisation (56) comprend des moyens de vannage (62) pour contrôler la recirculation des gaz d'échappement dans cette canalisation, et **en ce que** les moyens de vannage comprennent une vanne proportionnelle (62).

2. Dispositif selon la revendication 1, **caractérisé en ce que** la canalisation (56) prend naissance en un point d'intersection (58) avec la conduite de gaz d'échappement détendus (36) et aboutit à un point d'intersection (60) avec la conduite d'alimentation (40).

3. Dispositif selon l'une des revendications précédentes, **caractérisé en ce qu'**il comprend un échangeur de chaleur (66) pour le refroidissement des gaz d'échappement issus de la turbine (22).

4. Dispositif selon l'une des revendications précédentes, **caractérisé en ce qu'**il comprend des moyens de post-traitement (64) des gaz d'échappement sortant de la turbine.

5. Méthode de contrôle de la quantité d'air introduit à l'admission d'un moteur à combustion interne suralimenté comprenant au moins un turbocompresseur (18) avec un étage de compression (24) comportant au moins un compresseur (26) avec une admission (38) de fluide à comprimer, un étage de détente (20) avec au moins une turbine (22) à au moins une entrée (32) de gaz d'échappement et une sortie (34) de gaz d'échappement détendus, un conduit de transfert (46) de fluide comprimé de la sortie du compresseur vers l'au moins une entrée de la turbine avec des moyens de vannage (52) pour contrôler le transfert de fluide comprimé vers la turbine, ledit conduit de transfert (46) de fluide comprimé comportant un clapet anti-retour (54) qui interdit la circulation des gaz d'échappement de la conduite des gaz d'échappement (30) vers la conduite de fluide comprimé (44), **caractérisée en ce qu'**on dévie une partie des gaz d'échappement sortant de la turbine (22) pour l'introduire à l'admission du compresseur (26), **en ce qu'**on contrôle des moyens de vannage additionnels (61) placés en aval du point d'intersection (58) avec la conduite de gaz d'échappement détendus (36) pour forcer les gaz d'échappement à passer dans la canalisation (56), **en ce qu'**on contrôle des moyens de vannage additionnels (63) placés en amont du point d'intersection (60) avec la conduite d'alimentation (40) pour forcer les gaz d'échappement à passer dans la canalisation (56), **en ce que** la canalisation (56) comprend des moyens de vannage (62) pour contrôler la recirculation des gaz d'échappement dans cette canalisation, les moyens de vannage comprenant une vanne proportionnelle (62).

6. Méthode selon la revendication 5, **caractérisée en ce qu'**on contrôle la recirculation de gaz d'échappement entre la turbine (22) et le compresseur (26) par des moyens de vannage (62, 61, 63).

7. Application du dispositif et de la méthode selon l'une des revendications précédentes à un moteur Diesel.

## Patentansprüche

1. Vorrichtung zur Kontrolle der Luftmenge, die am Einlass eines aufgeladenen Verbrennungsmotors eingespeist wird, welcher mindestens Folgendes beinhaltet: einen Turbokompressor (18) mit einer Kompressionsstufe (24), die mindestens einen Kompressor (26) mit einem Einlass (38) für ein zu komprimierendes Fluid, der mit einer Zuführleitung (40) verbunden ist, umfasst, einer Entspannungsstufe (20) mit mindestens einer Turbine (22) mit mindestens einem Eintritt (32) für Abgase und einem Austritt (34) für entspannte Abgase, der mit einer Leitung für entspannte Abgase (36) verbunden ist, einer Rohrleitung für den Transport (46) eines komprimierten Fluids von dem Austritt des Kompressors zu dem mindestens einen Eintritt der Turbine mit Ventilmitteln (52), um den Transport eines komprimierten Fluids zu der Turbine zu kontrollieren, **dadurch gekennzeichnet, dass** er einen Kanal zur Abgasrückführung (56) zwischen dem Abgasaustritt (34) der Turbine (22) und dem Einlass (38) des Kompressors (26) beinhaltet, dass die Rohrleitung für den Transport (46) eines komprimierten Fluids eine Rückschlagklappe (54) umfasst, die die Zirkulation der Abgase von der Abgasleitung (30) zu der Leitung für ein komprimiertes Fluid (44) verhindert, dass die Vorrichtung zusätzliche Ventilmittel (61) beinhaltet, die stromabwärts des Kreuzungspunkts (58) mit der Leitung für entspannte Abgase (36) angeordnet sind, um die Abgase zu zwingen, durch den Kanal (56) zu strömen, dass die Vorrichtung zusätzliche Ventilmittel (63) beinhaltet, die stromaufwärts des Kreuzungspunkts (60) mit der Zuführleitung (40) angeordnet sind, um die Abgase zu zwingen, durch den Kanal (56) zu strömen, dass der Kanal (56) Ventilmittel (62) beinhaltet, um die Rückführung der Abgase in diesem Kanal zu kontrollieren, und dass die Ventilmittel ein Proportionalventil (62) beinhalten.

2. Vorrichtung nach Anspruch 1, **dadurch gekennzeichnet, dass** der Kanal (56) an einem Kreuzungspunkt (58) mit der Leitung für entspannte Abgase (36) startet und an einem Kreuzungspunkt (60) mit der Zuführleitung (40) endet.

3. Vorrichtung nach einem der vorhergehenden Ansprüche, **dadurch gekennzeichnet, dass** sie einen Wärmetauscher (66) zum Kühlen der aus der Turbine (22) kommenden Abgase beinhaltet.

4. Vorrichtung nach einem der vorhergehenden Ansprüche, **dadurch gekennzeichnet, dass** sie Mittel zur Nachbehandlung (64) der aus der Turbine austretenden Abgase beinhaltet.

5. Verfahren zur Kontrolle der Luftmenge, die am Einlass eines aufgeladenen Verbrennungsmotors eingespeist wird, welcher mindestens Folgendes beinhaltet: einen Turbokompressor (18) mit einer Kompressionsstufe (24), die mindestens einen Kompressor (26) mit einem Einlass (38) für ein zu komprimierendes Fluid umfasst, einer Entspannungsstufe (20) mit mindestens einer Turbine (22) mit mindestens einem Eintritt (32) für Abgase und einem Austritt (34) für entspannte Abgase, einer Rohrleitung für den Transport (46) eines komprimierten Fluids von dem Austritt des Kompressors zu dem mindestens einen Eintritt der Turbine mit Ventilmitteln (52), um den Transport eines komprimierten Fluids zu der Turbine zu kontrollieren, wobei die Rohrleitung für den Transport (46) eines komprimierten Fluids eine Rückschlagklappe (54) umfasst, die die Zirkulation der Abgase von der Abgasleitung (30) zu der Leitung für ein komprimiertes Fluid (44) verhindert, **dadurch gekennzeichnet, dass** ein Teil der Abgase, die aus der Turbine (22) austreten, umgelenkt wird, um ihn am Einlass des Kompressors (26) einzuspeisen, dass zusätzliche Ventilmittel (61), die stromabwärts des Kreuzungspunkts (58) mit der Leitung für entspannte Abgase (36) angeordnet sind, kontrolliert werden, um die Abgase zu zwingen, durch den Kanal (56) zu strömen, dass zusätzliche Ventilmittel (63), die stromaufwärts des Kreuzungspunkts (60) mit der Zuführleitung (40) angeordnet sind, kontrolliert werden, um die Abgase zu zwingen, durch den Kanal (56) zu strömen, dass der Kanal (56) Ventilmittel (62) beinhaltet, um die Rückführung der Abgase in diesem Kanal zu kontrollieren, wobei die Ventilmittel ein Proportionalventil (62) beinhalten.

6. Verfahren nach Anspruch 5, **dadurch gekennzeichnet, dass** die Rückführung von Abgasen zwischen der Turbine (22) und dem Kompressor (26) durch Ventilmittel (62, 61, 63) kontrolliert wird.

7. Anwendung der Vorrichtung und des Verfahrens nach einem der vorhergehenden Ansprüche auf einen Dieselmotor.

## Claims

1. Device for controlling the quantity of air introduced at the intake of a supercharged internal combustion engine comprising at least one turbocharger (18) with a compression stage (24) comprising at least one compressor (26) with an intake (38) of fluid to be compressed linked to a supply pipe (40), an expansion stage (20) with at least one turbine (22) with at least one exhaust gas inlet (32) and one outlet (34) for expanded exhaust gases linked to an expanded exhaust gas pipe (36), a compressed fluid transfer pipe (46) from the outlet of the compressor to the at least one inlet of the turbine with valving means (52) for controlling the transfer of compressed fluid to the turbine, **characterized in that** it comprises an exhaust gas recirculation line (56) between the exhaust gas outlet (34) of the turbine (22) and the intake (38) of the compressor (26), **in that** said compressed fluid transfer pipe (46) comprises a check valve (54) which prevents the circulation of the exhaust gases from the exhaust gas pipe (30) to the compressed fluid pipe (44), **in that** the device comprises additional valving means (61) placed downstream of the point of intersection (58) with the expanded exhaust gas pipe (36) to force the exhaust gases to pass into the line (56), **in that** the device comprises additional valving means (63) placed upstream of the point of intersection (60) with the supply pipe (40) to force the exhaust gases to pass into the line (56), **in that** the line (56) comprises valving means (62) to control the recirculation of the exhaust gases **in that** line, and **in that** the valving means comprise a proportional valve (62).

2. Device according to Claim 1, **characterized in that** the line (56) starts at a point of intersection (58) with the expanded exhaust gas pipe (36) and culminates at a point of intersection (60) with the supply pipe (40).

3. Device according to one of the preceding claims, **characterized in that** it comprises a heat exchanger (66) for cooling the exhaust gases coming from the turbine (22) .

4. Device according to one of the preceding claims, **characterized in that** it comprises post-treatment means (64) for treating the exhaust gases leaving the turbine.

5. Method for controlling the quantity of air introduced at the intake of a supercharged internal combustion engine comprising at least one turbocharger (18) with a compression stage (24) comprising at least one compressor (26) with an intake (38) for fluid to be compressed, an expansion stage (20) with at least one turbine (22) with at least one exhaust gas inlet (32) and one expanded exhaust gas outlet (34), a compressed fluid transfer pipe (46) from the outlet of the compressor to the at least one inlet of the turbine with valving means (52) for controlling the transfer of compressed fluid to the turbine, said compressed fluid transfer pipe (46) comprising a check valve (54) which prevents the circulation of the exhaust gases from the exhaust gas pipe (30) to the compressed fluid pipe (44), **characterized in that** a portion of the exhaust gases leaving the turbine (22) is diverted to be introduced at the intake of the compressor (26), **in that** additional valving means (61) placed downstream of the point of intersection (58) with the expanded exhaust gas pipe (36) are controlled to force the exhaust gases to pass into the line (56), **in that** additional valving means (63) placed upstream of the point of intersection (60) with the supply pipe (40) are controlled to force the exhaust gases to pass into the line (56), **in that** the line (56) comprises valving means (62) for controlling the recirculation of the exhaust gases **in that** line, the valving means comprising a proportional valve (62).

6. Method according to Claim 5, **characterized in that** the recirculation of exhaust gas between the turbine (22) and the compressor (26) is controlled by valving means (62, 61, 63).

7. Application of the device and of the method according to one of the preceding claims to a diesel engine.
